# EUROPÄISCHE PATENTSCHRIFT

(11) **EP 0 897 963 B1**
(45) Veröffentlichungstag und Bekanntmachung des Hinweises auf die Patenterteilung: **31.03.2004**
(21) Anmeldenummer: 98112354.0
(22) Anmeldetag: 02.07.1998
(51) Int. Cl.: C09D 167/00

(54) **Haftungsverbessernder Zusatz für Beschichtungen auf Basis thermoplastischer Polyester**
Adhesion improving additive for thermoplastic polyester based coating compositions
Additif promoteur d'adhésion pour compositions de revêtement à base de polyester thermoplastique

(30) Priorität: 20.08.1997 DE 19736130
(43) Veröffentlichungstag der Anmeldung: 24.02.1999
(73) Patentinhaber: Degussa AG, 40474 Düsseldorf (DE)
(72) Erfinder: Hahn, Siegfried, 53773 Hennef (DE); Spittka, Rainer, 46562 Voerde (DE)

(56) Entgegenhaltungen:
- EP-A- 0 432 497
- GB-A- 1 037 925
- DATABASE WPI Week 7527 Derwent Publications Ltd., London, GB; AN 75-44927w XP002088592 & JP 49 098435 A (TEIJIN LTD) , 18. September 1974
- DATABASE WPI Week 7527 Derwent Publications Ltd., London, GB; AN 75-44926w XP002088593 & JP 49 098433 A (TEIJIN LTD) , 18. September 1974
- DATABASE WPI Week 7644 Derwent Publications Ltd., London, GB; AN 76-81941x XP002088594 & JP 51 103933 A (TEIJIN LTD) , 14. September 1976

## Beschreibung

Gegenstand der Erfindung ist ein Epoxidharz-freies Beschichtungssystem auf Basis von thermoplastischen Polyestern in welches ein Polyester als haftungsverbessernder Zusatz eingearbeitet wird.

Auf Basis thermoplastischer Polyester werden seit geraumer Zeit Beschichtungsmaterialien für die verschiedensten Einsatzzwecke hergestellt und vermarktet. Üblicherweise werden hierzu auf Compoundierextrudern oder Knetern die für den vorgesehenen Anwendungszweck erforderlichen Zuschlagstoffe, wie Farbpigmente, Füllstoffe, Stabilisatoren, Verlaufmittel, Glanzmittel und/oder sonstige Zusatz- und Hilfsstoffe, in den Polyester eingearbeitet. Der Compound kann dann als Lösung, Folie, Schmelze, Pulver oder in sonstiger Form in dem vorgesehenen Einsatzbereich appliziert werden.

In der Praxis hat sich besonders die Pulverbeschichtung von Metallen nach dem Wirbelsinter- oder Elektrostatik-Verfahren bewährt. Beim Wirbelsinterverfahren werden heiße Metallteile durch Eintauchen in eine durch Luft fluidisierte Wirbelschicht des pulverförmigen Beschichtungsmaterials beschichtet. Hierbei schmilzt der Thermoplast auf der Oberfläche auf und bildet nach Erkalten einen schützenden Überzug. Bei der elektrostatischen Beschichtung wird Pulver mittels Druckluft auf das Metallteil gesprüht, wo es durch Anlegen einer Gleichstrom-Hochspannung haften bleibt. Anschließend erhält man durch Aufschmelzen (z. B. in einem Ofen oder über einer Gasflamme) ebenfalls einen Überzug. Das Beschichtungsmaterial kann auch auf andere Art, z. B. als Schmelze oder Folie, eingesetzt werden.

Obwohl die Herstellung von thermoplastischen Beschichtungspulvern wegen der Kaltvermahlung mit Flüssigstickstoff relativ aufwendig ist, konnte der Marktanteil gegen die Konkurrenz von Naßlacken und reaktiven Systemen gehalten und sogar vergrößert werden. Hier sind umwelttechnologische Aspekte entscheidend, da Beschichtungspulver gänzlich ohne Lösemittel auskommen. Weiterhin haben rein thermoplastische Beschichtungsmaterialien im Vergleich zu reaktiven Systemen verarbeitungstechnische Vorteile, da sie lediglich durch Wärmezufuhr aufgeschmolzen werden und durch Abkühlung härten. Hierdurch bedingt eignen sie sich auch für extrem schnelle Beschichtungsanlagen mit nachgeschalteter Weiterverarbeitung, für die reaktive Systeme in der Regel zu langsam sind. Reaktive Systeme erfordern naturgemäß chemisch reaktionsfreudige Komponenten und Härter, die oftmals toxikologisch bedenklich sind. Außerdem verbleibt nach der Reaktion ein Anteil Restmonomer in der Beschichtung.

Dies sind auch die Gründe, warum beim Nahtschutz von geschweißten Konservendosen bevorzugt thermoplastische Systeme eingesetzt werden. In der Konserve wird die Dosennaht durch thermoplastische Polyester zuverlässig gegen jeglichen Inhaltsstoff geschützt und damit der Inhalt unverändert bewahrt.

Die notwendigen lacktechnischen Eigenschaften wie z. B. Haftung, Elastizität und Sterilisierbarkeit der Beschichtung werden nicht durch den verwendeten thermoplastischen Polyester allein bewerkstelligt. Vielmehr hat man erst durch die Zumischung geeigneter Additive deutliche Verbesserungen erzielt. Durch die Einwirkung entsprechender Rezepturen hat man die Eigenschaften so weit optimiert, daß heute Beschichtungen aus thermoplastischen Polyestern sehr gute Gebrauchseigenschaften erreicht haben.

Stand der Technik ist es für die Haftverbesserung Epoxidharze als Zusatz in die thermoplastischen Polyester einzuarbeiten. Das Epoxidharz wird hierbei nicht wie sonst üblich chemisch vernetzt, sondern lediglich mit dem Polyester vermischt, da üblicherweise eingesetzte Polyester keine nennenswerten reaktiven Gruppen besitzen. Die Wirksamkeit des Epoxidharz-Zusatzes im Hinblick auf die lacktechnischen Eigenschaften ist ausgezeichnet und somit können sämtliche Anforderungen an das Beschichtungssystem voll erfüllt werden.

Soweit das Beschichtungssystem im Bereich Lebensmittelverpackung eingesetzt wird, müssen einschlägige Regularien erfüllt werden, wie FDA 175.300 (USA), Richtlinie 90/128 (EU), usw. Gerade hier haben thermoplastische Systeme, wie schon ausgeführt, gegenüber anderen Systemen entscheidende Vorteile.

In jüngster Vergangenheit sind Epoxidharze, die als Beschichtungsmaterial im Bereich Lebensmittelverpackung eingesetzt werden, in der Öffentlichkeit in die Kritik geraten. Spuren von Bisphenol-A-diglycidether (BADGE) werden aus Epoxidharzlacken aus Konservendoseninnenbeschichtungen herausgelöst und mit dem Nahrungsmittel in den menschlichen Organismus aufgenommen. In ölhaltigen Fischkonserven wurden sogar unzulässig hohe BADGE-Konzentrationen gemessen, die aus der Innenbeschichtung herausgelöst wurden. BADGE ist nun in Verdacht geraten, nach Aufnahme in den menschlichen Organismus krebserregende und oestrogene Effekte hervorgerufen zu haben. Dies führte dazu, daß der wissenschaftliche Lebensmittelausschuß (SCF) der Europäischen Union (EU) im Juni 1996 eine toxikologische Neubewertung von BADGE vorgenommen hat. Demnach gibt es zwar noch keine Anhaltspunkte für eine krebserregende Wirkung, jedoch fordert das Bundesinstitut für gesundheitlichen Verbraucherschutz und Veterinärmedizin (BgVV) in einer Pressemitteilung vom November 1996 technologische Maßnahmen zur Minimierung der Kontamination von Lebensmitteln. BADGE-Gehalte von mehr als 1 mg/kg werden demnach als gesundheitlich bedenklich eingestuft.

Übliche thermoplastische Beschichtungssysteme enthalten in der Rezeptur einen geringen Prozentsatz Epoxidharz, der natürlich ebenfalls einen gewissen Anteil Restmonomer (BADGE) enthält. Somit ist das im Grunde ökologisch und toxikologisch einwandfreie Beschichtungssystem thermoplastische Polyester doch noch über den Epoxidharzzusatz in die Kritik geraten.

Damit stellte sich die Aufgabe, einen Zusatz für ein Beschichtungssystem zu finden, der toxikologisch völlig unbedenklich ist und mindestens die gleichguten Eigenschaften des Epoxidharzzusatzes gewährleistet.
Überraschenderweise wurde gefunden, daß bestimmte Polyester, gemäß den Ansprüchen, als Zusatz zu den üblichen thermoplastischen Polyestern zu Beschichtungen mit gleichguten Ergebnissen führen und somit die Epoxidharze ersetzen können. Insbesondere sind auch Polyester geeignet, die noch eine deutliche Säurezahl aufweisen, was eine besonders gute Haftung auf Metallen bewirkt.

Die haftungsverbessernden Polyester werden in Mengen von 0,5 bis 15 Massen%, bezogen auf den gesamten Compound, eingesetzt. Sie sind amorph und haben eine Molmasse von 500 bis 20 000, vorzugsweise 1 000 bis 15 000, und bestehen aus folgenden Monomeren.
A) aliphatischen und/oder cycloaliphatischen und aromatischen mehrbasigen Säuren und/oder deren esterbildenden Derivaten in Kombination mit
B) aliphatischen und/oder cycloaliphatischen mehrfunktionellen Alkoholen und gegebenenfalls
C) Hydroxicarbonsäuren und/oder deren Derivaten.

Vorzugsweise enthält der amorphe, haftungsverbessernde Polyester als Säurekomponente mindestens eine aromatische Dicarbonsäure wie z. B. Terephthalsäure, sowie mindestens eine aliphatische Dicarbonsäure mit 2 bis 36 Kohlenstoffatomen oder deren esterbildenden Derivate. Auf der Alkoholseite enthält er mindestens ein lineares 1,ω-Diol mit 2 bis 36 Kohlenstoffatomen, mindestens ein weiteres aliphatisches Diol mit 3 bis 36 Kohlenstoffatomen, sowie gegebenenfalls weitere mehrfunktionelle Alkohole.

Die haftungsverbessernden Polyester haben eine Glastemperatur zwischen 20 und 60 °C, die Viskositätszahl beträgt > 45 ml/g, vorzugsweise > 50 ml/g.

Als thermoplastischer Basispolyester in den erfindungsgemäßen Beschichtungsmaterialien wird ein teilkristalliner Polyester mit einer Viskositätszahl > 60 ml/g, vorzugsweise > 70 ml/g, einer Glastemperatur zwischen 10 und 40 °C und einem Schmelzbereich zwischen 150 und 200 °C, vorzugsweise zwischen 160 und 180 °C, eingesetzt.

Der Basispolyester hat als Säurekomponente mindestens eine aromatische Dicarbonsäure wie z.B. Terephthalsäure, sowie mindestens eine aliphatische Dicarbonsäure mit 2 bis 36 Kohlenstoffatomen oder deren esterbildenden Derivate. Auf der Diolseite enthält er vorzugsweise 1,4-Butandiol und fakultativ ein oder mehrere aliphatische Diole mit 2 bis 36 Kohlenstoffatomen.

Das erfindungsgemäße Beschichtungssystem kann als zusätzliche Komponente einen weiteren Polyester enthalten. Dieser Polyester ist teilkristallin und enthält als Säurekomponente mindestens eine aromatische Dicarbonsäure, wie z. B. Terephthalsäure sowie mindestens eine aliphatische Dicarbonsäure mit 2 bis 36 Kohlenstoffatomen oder deren esterbildenden Derivate. Bezüglich der Diolkomponente enthält der Polyester 1,4-Butandiol und fakultativ ein oder mehrere aliphatische Diole mit 2 bis 36 Kohlenstoffatomen. Der Polyester wird in Mengen von 2 bis 60 Massen-%, vorzugsweise 5 bis 50 Massen-% und besonders bevorzugt 10 bis 40 Massen-%, bezogen auf den gesamten Compound, eingesetzt. Er hat eine Viskositätszahl > 60 ml/g, vorzugsweise > 70 ml/g, eine Glastemperatur zwischen -50 und 0 °C, vorzugsweise -40 bis -10 °C und einen Schmelzbereich zwischen 140 bis 200 °C, vorzugsweise 145 bis 170 °C. Durch diesen Polyester bekommt der Compound flexible Eigenschaften und eignet sich besonders zur Beschichtung von Teilen, die nachträglich mechanisch verformt werden.

Die erfindungsgemäßen Beschichtungsmaterialien können für die verschiedensten Einsatzzwecke verwendet werden. Ein besonderes Einsatzgebiet ist die Beschichtung im Bereich der Lebensmittelverpackung. Hierzu werden die für den vorgesehenen Anwendungszweck erforderlichen Zuschlagstoffe, wie Farbpigmente, Füllstoffe, Stabilisatoren, Verlaufmittel, Glanzmittel und/oder sonstige Zusatz- und Hilfsstoffe, in den Polyester eingearbeitet. Der Compound kann dann als Lösung, Folie, Schmelze, Pulver oder in sonstiger Form in dem vorgesehenen Einsatzbereich appliziert werden.

### Vergleichsbeispiel 1: (Thermoplastischer Polyester ohne Zusatz):

Ein thermoplastischer Polyester (nach DE-A 23 46 559) wird unter Zugabe 20 % Titanoxid und 0,5 % eines Verlaufmittels zu einem Compound verarbeitet. Anschließend wird mittels Kaltvermahlung und Siebung ein Pulver < 85 µm hergestellt. Das Pulver wird mittels Elektrostatik-Pistole auf ca. 0,4 mm starke Bleche aufgesprüht und 5 Minuten bei 200 °C in einem Ofen aufgeschmolzen.

Die ca. 60 µm starke Beschichtung hat folgende Eigenschaften:
Haftung: Gitterschnitt GT 0,
Elastizität: Erichsentiefung > 10 mm,
Haftung nach Heißwassertest: Gitterschnitt GT 0,
Haftung nach Essigsäuresterilisation (3 %): Gitterschnitt GT 4,
Haftung nach Milchsäuresterilisation (2 %): Gitterschnitt GT 4.

Endbeurteilung: Das Beschichtungssystem verliert seine Haftung nach einem Säureangriff und kann in der Praxis nur begrenzt eingesetzt werden.

### Vergleichsbeispiel 2: (Thermoplastischer Polyester mit Epoxidharzzusatz):

Beschichtungspulver (hergestellt wie in Vergleichsbeispiel 1) aber mit Zusatz von 5 % Epoxidharzzusatz. Analog Beispiel 1 wurde das Pulver mittels Elektrostatik-Pistole auf ca. 0,4 mm starke Bleche aufgesprüht und 5 Minuten bei 200 °C in einem Ofen aufgeschmolzen.

Die ca. 60 µm starke Beschichtung hat folgende Eigenschaften:
Haftung: Gitterschnitt GT 0,
Elastizität: Erichsentiefung > 10 mm,
Haftung nach Heißwassertest: Gitterschnitt GT 0,
Haftung nach Essigsäuresterilisation (3 %): Gitterschnitt GT 0,
Haftung nach Milchsäuresterilisation (2 %): Gitterschnitt GT 0.

### Beispiel 1: (Thermoplastischer Polyester mit Zusatz des haftungsverbessernden Polyesterharzes):

Beschichtungspulver (hergestellt wie in Vergleichsbeispiel 1) aber mit Zusatz von 3 % Polyesterharz folgender Zusammensetzung:
Terephthalsäure
Isophthalsäure
Sebacinsäure
Monoethylenglycol
Butandiol-1,4
Propandiol-1,2
Trimethylolpropan
mit nachfolgenden physikalischen Daten:
Viskositätszahl ca. 60 ml/g
Glastemperatur ca. 45 °C
OH-Zahl ca. 5 mg KOH/g.

Analog Vergleichsbeispiel 1 wurde das Pulver mittels Elektrostatik-Pistole auf ca. 0,4 mm starke Bleche aufgesprüht und 5 Minuten bei 200 °C in einem Ofen aufgeschmolzen.

Die ca. 60 µm starke Beschichtung hat folgende Eigenschaften:
Haftung: Gitterschnitt GT 0,
Elastizität: Erichsentiefung > 10 mm,
Haftung nach Heißwassertest: Gitterschnitt GT 0,
Haftung nach Essigsäuresterilisation (3 %): Gitterschnitt GT 0,
Haftung nach Milchsäuresterilisation (2 %): Gitterschnitt GT 0.

Endbeurteilung: Das Beschichtungssystem ist sterilisationsfest, die Haftung ist auch nach einem Säureangriff sehr gut, das System kann für alle Anwendungsgebiete eingesetzt werden.

In Vergleichsbeispiel 1 wird deutlich, daß auch ein thermoplastischer Polyester nicht alle Anforderungen an ein Beschichtungssystem erfüllen kann. Vergleichsbeispiel 2 zeigt das technisch derzeit genutzte System, allerdings kann diese Formulierung BADGE freisetzen.

In Beispiel 1 wird die Anwendung der erfindungsgemäßen, haftungsverbessernden Polyester gezeigt. Sie bieten einen völlig gleichwertigen Ersatz von Epoxidharz bei gleichguten Gebrauchseigenschaften.

## Patentansprüche

1. Beschichtungssystem zum Beschichten von Lebensmittelverpackungen auf Basis von thermoplastischen Polyestern, Farbpigmenten, Füllstoffen, Verlaufmitteln und weiteren üblichen Hilfsstoffen,
**dadurch gekennzeichnet,**
**dass** das Beschichtungssystem aus einem teilkristallinen Basispolyester bestehend aus
A) mindestens einer aromatischen mehrbasigen Dicarbonsäure und mindestens einer aliphatischen Dicarbonsäure mit 2 bis 36 Kohlenstoffatomen oder deren esterbildenden Derivaten und
B) 1,4 Butandiol oder 1,4 Butandiol mit einem oder mehreren aliphatischen Diolen mit 2 bis 36 Kohlenstoffatomen
mit einer Glastemperatur zwischen 10 und 40 °C
und einem haftungsverbessernden amorphen Polyester bestehend aus
A) aliphatischen und/oder cycloaliphatischen und aromatischen mehrbasigen Säuren und/oder deren esterbildenden Derivaten,
B) aliphatischen und/oder cycloaliphatischen mehrfunktionellen Alkoholen und
C) gegebenenfalls Hydroxicarbonsäuren und/oder deren Derivaten
mit einer Glastemperatur zwischen 20 und 60 °C und einer Molmasse von 500 bis 20 000 in einer Menge von 0,5 bis 15 Massen-%, bezogen auf den Gesamtcompound, zusammengesetzt ist.

2. Beschichtungssystem nach Anspruch 1,
**dadurch gekennzeichnet,**
**dass** der haftungsverbessernde Polyester eine Viskosität > 45 ml/g aufweist.

3. Beschichtungssystem nach einem der vorhergehenden Ansprüche,
**dadurch gekennzeichnet,**
**dass** der haftungsverbessernde Polyester eine Viskosität > 50 ml/g aufweist.

4. Beschichtungssystem nach einem der vorhergehenden Ansprüche,
**dadurch gekennzeichnet,**
**dass** der haftungsverbessernde Polyester aus
A) mindestens einer aromatischen mehrbasigen Dicarbonsäure und mindestens einer aliphatischen Dicarbonsäure mit 2 bis 36 Kohlenstoffatomen und/oder deren
esterbildenden Derivaten
und
B) mindestens einem linearen aliphatischen Diol mit 2 bis 36 Kohlenstoffatomen, sowie mindestens einem weiteren aliphatischen Polyol mit 3 bis 36 Kohlenstoffatomen
besteht.

5. Beschichtungssystem nach Anspruch 1,
**dadurch gekennzeichnet,**
**dass** der Basispolyester einen Schmelzbereich zwischen 150 und 200 °C und eine Viskosität > 60 ml/g aufweist.

6. Beschichtungssystem nach Anspruch 1,
**dadurch gekennzeichnet,**
**dass** der Basispolyester einen Schmelzbereich zwischen 160 und 180 °C und eine Viskosität > 70 ml/g aufweist.

7. Beschichtungssystem nach einem der vorhergehenden Ansprüche,
**dadurch gekennzeichnet,**
**daß** das Beschichtungssystem einen weiteren Polyester bestehend aus
A) mindestens einer aromatischen Dicarbonsäure sowie mindestens einer aliphatischen Dicarbonsäure mit 2 bis 36 Kohlenstoffatomen oder deren esterbildenden Derivaten
und
B) 1,4-Butandiol oder 1,4-Butandiol mit einem oder mehreren aliphatischen Diolen mit 2 bis 36 Kohlenstoffatomen
mit einer Glastemperatur zwischen -50 bis 0 °C, einem Schmelzbereich zwischen 140 bis 200 'C und einer Viskosität > 60 ml/g in einer Menge von 2 bis 60 Massen-%, bezogen auf den gesamten Compound, als flexibilisierenden Zusatz enthält.

8. Verwendung eines Beschichtungssystems nach einem der vorhergehenden Ansprüche zum Beschichten von Lebensmittelverpackungen.

## Claims

1. A coating system for coating food packaging based on thermoplastic polyesters, colour pigments, fillers, levelling agents and further customary auxiliaries,
**characterized in that**
the coating system is composed of a partially crystalline base polyester comprising
A) at least one aromatic polybasic dicarboxylic acid and at least one aliphatic dicarboxylic acid having 2 to 36 carbon atoms and/or ester-forming derivatives thereof, and
B) 1,4-butanediol or 1,4-butanediol with one or more aliphatic diols having 2 to 36 carbon atoms
and having a glass transition temperature of from 10 to 40°C
and an adhesion-promoting amorphous polyester comprising
A) aliphatic and/or cycloaliphatic and aromatic polybasic acids and/or ester-forming derivatives thereof,
B) aliphatic and/or cycloaliphatic polyfunctional alcohols and
C) if desired, hydroxycarboxylic acids and/or derivatives thereof
and having a glass transition temperature of from 20 to 60°C and a molar mass of from 500 to 20,000, in an amount of from 0.5 to 15% by mass, based on the overall compound.

2. A coating system according to claim 1,
**characterized in that**
said adhesion-promoting polyester has a viscosity > 45 ml/g.

3. A coating system according to either one of the preceding claims,
**characterized in that**
said adhesion-promoting polyester has a viscosity > 50 ml/g.

4. A coating system according to any one of the preceding claims,
**characterized in that**
said adhesion-promoting polyester comprises
A) at least one aromatic polybasic dicarboxylic acid and at least one aliphatic dicarboxylic acid having 2 to 36 carbon atoms and/or ester-forming derivatives thereof, and
B) at least one linear aliphatic diol having 2 to 36 carbon atoms and at least one further aliphatic polyol having 3 to 36 carbon atoms.

5. A coating system according to claim 1,
**characterized in that**
the base polyester has a melting range of from 150 to 200°C and a viscosity > 60 ml/g.

6. A coating system according to claim 1,
**characterized in that**
the base polyester has a melting range of from 160 to 180°C and a viscosity > 70 ml/g.

7. A coating system according to any one of the preceding claims,
**characterized in that**
the coating system comprises a further polyester comprising
A) at least one aromatic dicarboxylic acid and at least one aliphatic dicarboxylic acid having 2 to 36 carbon atoms or ester-forming derivatives thereof, and
B) 1,4-butanediol or 1,4-butanediol with one or more aliphatic diols having 2 to 36 carbon atoms
and having a glass transition temperature of from -50 to 0°C, a melting range of from 140 to 200°C and a viscosity > 60 ml/g, in an amount of from 2 to 60% by mass, based on the overall compound, as flexibilizing additive.

8. The use of a coating system according to any one of the preceding claims for coating food packaging.

## Revendications

1. Système de revêtement pour le revêtement d'emballages de produits alimentaires, à base de polyesters thermoplastiques, de pigments colorés, de produits de charge, d'agents d'écoulement, et d'autres agents auxiliaires usuels,
**caractérisé en ce que**
le système de revêtement est composé d'un polyester de base partiellement cristallin consistant en
A) au moins un acide dicarboxylique aromatique polybasique et au moins un acide dicarboxylique aliphatique ayant de 2 à 36 atomes de carbone ou de leurs dérivés qui forment des esters, et
B) de 1,4-butanediol ou de 1,4-butanediol avec un ou plusieurs diols aliphatiques ayant de 2 à 36 atomes de carbone,
ayant une température vitreuse comprise entre 10 et 40°C et d'un polyester amorphe qui améliore l'adhésion consistant en
A) des acides aliphatiques et/ou cycloaliphatiques et aromatiques polybasiques, et/ou de leurs dérivés qui forment des esters,
B) des alcools aliphatiques et/ou cycloaliphatiques plurifonctionnels et
C) le cas échéant des acides carboxyliques hydroxylés et/ou de leurs dérivés,
ayant une température vitreuse comprise entre 20 et 60°C, et une masse molaire de 500 à 20 000 en une quantité allant de 0,5 à 15 % en masse rapporté au mélange total.

2. Système de revêtement selon la revendication 1,
**caractérisé en ce que**
le polyester qui améliore l'adhésion possède une viscosité > 45 ml/g.

3. Système de revêtement selon l'une des revendications précédentes,
**caractérisé en ce que**
le polyester qui améliore l'adhésion, possède une viscosité > 50 ml/g.

4. Système de revêtement selon l'une des revendications précédentes,
**caractérisé en ce que** le polyester qui améliore l'adhésion consiste en
A) au moins un acide dicarboxylique aromatique polybasique et au moins un acide dicarboxylique aliphatique ayant de 2 à 36 atomes de carbone et/ou leurs dérivés qui forment des esters et
B) au moins un diol aliphatique linéaire ayant de 2 à 36 atomes de carbone, ainsi qu'au moins un autre polyol aliphatique ayant de 3 à 36 atomes de carbone.

5. Système de revêtement selon la revendication 1,
**caractérisé en ce que**
le polyester de base possède une plage de fusion comprise entre 150 et 200°C et une viscosité > 60 ml/g.

6. Système de revêtement selon la revendication 1,
**caractérisé en ce que**
le polyester de base possède une plage de fusion comprise entre 160 et 180°C et une viscosité > 70 ml/g.

7. Système de revêtement selon l'une des revendications précédentes,
**caractérisé en ce que**
le système de revêtement renferme un autre polyester consistant en :
A) au moins un acide dicarboxylique aromatique ainsi qu'au moins un acide dicarboxylique aliphatique ayant de 2 à 36 atomes de carbone ou leurs dérivés qui forment des esters, et
B) du 1,4-butanediol ou du 1,4-butanediol avec un ou plusieurs diols aliphatiques ayant de 2 à 36 atomes de carbone,
ayant une température vitreuse comprise entre -50 et 0°C, une plage de fusion comprise entre 140 et 200°C et une viscosité > 60 ml/g, en une quantité allant de 2 à 60 % en masse rapporté au mélange total, en tant qu'additif qui rend flexible.

8. Utilisation d'un système de revêtement selon l'une des revendications précédentes, en vue du revêtement d'emballages pour produits alimentaires.
